# EUROPEAN PATENT APPLICATION

(11) **EP 4 807 799 A1**
(43) Date of publication of application: **16.09.2026**
(21) Application number: 25227693.6
(22) Date of filing: 30.12.2025
(51) Int. Cl.: H01M 4/134, H01M 4/38, H01M 10/0525

(54) **ELECTRODE ACTIVE MATERIAL COMPOSITE PARTICLE, ELECTRODE ACTIVE MATERIAL LAYER, AND BATTERY**

(30) Priority: 13.03.2025 JP 2025040737
(71) Applicant: Toyota Jidosha Kabushiki Kaisha, Toyota-shi, Aichi-ken 471-8571 (JP)
(72) Inventor: NOMOTO, Kazushige, Toyota-Shi, Aichi-ken 471-8571 (JP); KUDO, So, Toyota-Shi, Aichi-Ken 471-8571 (JP)
(74) Representative: Cabinet Beau de Loménie

(57) **Abstract**

An electrode active material composite particle according to the present disclosure contains silicon primary particles. In the electrode active material composite particle according to the present disclosure, a value of the following Expression (1) is 5.0 MPa to 22.0 MPa Fracture strength / (Standard deviation of particle size / d50 particle size) . . . (1).

The electrode active material layer according to the present disclosure contains the electrode active material composite particles according to the present disclosure. A battery of the present disclosure has the electrode active material layer, and also the electrode active material layer contains the electrode active material composite particles of the present disclosure.

## Description

### BACKGROUND OF THE INVENTION

### 1. Field of the Invention

The present disclosure relates to an electrode active material composite particle, an electrode active material layer, and a battery.

### 2. Description of Related Art

Japanese Unexamined Patent Application Publication No. 2019-121557 (JP 2019-121557 A) describes that batteries containing silicon as an electrode active material have been conventionally developed.

### SUMMARY OF THE INVENTION

There is room for improvement in ionic conductivity of an electrode active material layer containing silicon as an electrode active material.

An object of the present disclosure is to provide an electrode active material composite particle that is capable of improving ionic conductivity of an electrode active material layer, an electrode active material layer including such an electrode active material composite particle, and a battery having such an electrode active material layer.

The present disclosers have found that the above issue can be solved by the following means.

### Aspect 1

An electrode active material composite particle, including
a plurality of silicon primary particles, in which
a value of the following Expression (1) is 5.0 MPa to 22.0 MPa$Fracture strength / \left(Standard deviation of particle size / d50 particle size\right)$

### Aspect 2

The electrode active material composite particle according to Aspect 1, in which the value of the Expression (1) is 7.0 MPa to 20.0 MPa.

### Aspect 3

The electrode active material composite particle according to Aspect 1 or 2, in which the fracture strength is 2.0 MPa or higher.

### Aspect 4

An electrode active material layer including the electrode active material composite particle according to any one of Aspects 1 to 3.

### Aspect 5

A battery including the electrode active material layer according to Aspect 4.

According to the present disclosure, an electrode active material composite particle that is capable of improving ionic conductivity of an electrode active material layer, an electrode active material layer including such an electrode active material composite particle, and a battery having such an electrode active material layer, can be provided.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
FIG. 1 is a schematic cross-sectional view illustrating an example of a battery according to the present disclosure; and
FIG. 2 is a graph showing a relation between a value of Expression (1) regarding electrode active material composite particles of Examples and Comparative Examples, and ionic conductivity of a layer containing the electrode active material composite particles.

### DETAILED DESCRIPTION OF EMBODIMENTS

An embodiment of the present disclosure will be described below in detail. Note that the present disclosure is not limited to the following embodiment, and can be carried out modified variously, within the scope of the present disclosure.

### Electrode Active Material Composite Particle

An electrode active material composite particle according to the present disclosure contains a plurality of silicon primary particles. In the electrode active material composite particle according to the present disclosure, a value of the following Expression (1) is 5.0 MPa to 22.0 MPa$Fracture strength / \left(Standard deviation of particle size / d50 particle size\right)$

The present disclosers have found that the electrode active material composite particles according to the present disclosure, in which the value of the above Expression (1) is within a predetermined range, can improve ionic conductivity of an electrode active material layer containing the particles.

The reason for this is presumed to be as follows, without intending to be bound by any theory.

That is to say, it is believed that the fracture strength of the composite particles has a distribution in accordance with particle size distribution. Accordingly, the present disclosers considered it appropriate to set a value, taking into consideration the particle size distribution, i.e., standard deviation of particle size, in order to correct the fracture strength of the composite particles to an appropriate value.

The standard deviation of the particle size is dependent on the magnitude of the particle size. Accordingly, it is believed that simply dividing the fracture strength by the standard deviation of the particle size does not provide an appropriate value for fracture strength that takes into account the particle size distribution. Accordingly, the present disclosers calculated the value of the standard deviation of particle size / particle size, and employed a value obtained by dividing the fracture strength by this value as a value that takes into account the particle size distribution with respect to the fracture strength.

Composite particles, of which the fracture strength that takes into consideration the particle size distribution is equal to or greater than a predetermined value as determined by Expression (1) above, have an appropriate strength, and therefore are believed to be unlikely to flatten, collapse, or the like, under compressive stress. Such composite particles are believed to be able to suppress an increase in tortuosity factor (tortuosity coefficient) of an electrode active material layer containing these particles, and accordingly can improve the ionic conductivity of the electrode active material layer.

It is believed that composite particles of which the value of the above Expression (1) is equal to or less than a predetermined value have appropriate strength, and are therefore less likely to spring back in response to compressive stress. It is believed that such composite particles form gaps less readily between the electrode active material layer containing these particles and a solid electrolyte interface, and accordingly can suppress interruption of diffusion paths of carrier ions, as well as increase in the tortuosity factor of the electrode active material layer. It is believed that such composite particles can thereby improve the ionic conductivity of the electrode active material layer.

The electrode active material composite particles are secondary particles formed by agglomeration of the silicon primary particles serving as the electrode active material. The electrode active material composite particles may be secondary particles formed by granulation of the silicon primary particles. In the present disclosure, the "electrode active material composite particles" may be simply referred to as "composite particles".

The "electrode active material" may be either "cathode active material" or "anode active material", and may particularly be "anode active material".

Each of the elements making up the electrode active material composite particles according to the present disclosure will be described below.

### Silicon Primary Particles

The electrode active material composite particle according to the present disclosure contains the silicon primary particles. The silicon in the silicon primary particles functions as an electrode active material and expands and contracts with charging and discharging of the battery. In an electrode active material layer containing the electrode active material composite particles according to the present disclosure, ionic conductivity is improved, thereby suppressing unevenness in reaction. Accordingly, the electrode active material composite particles according to the present disclosure also have an advantage of mitigating the effects of expansion and contraction of silicon that accompanies charging and discharging of the battery.

The composition of the silicon primary particles is not limited in particular. The proportion of silicon in all elements contained in the silicon primary particles may be, for example, 50 mol% or more, 70 mol% or more, 90 mol% or more, 95 mol% or more, or 99 mol% or more. The silicon primary particles may or may not contain elements other than silicon. Examples of elements other than silicon include Li, Sn, Fe, Co, Ni, Ti, Cr, B, P, and so forth. The silicon primary particles may include oxides of silicon.

The silicon primary particles may be amorphous silicon primary particles or crystalline silicon primary particles, and in particular may be crystalline silicon primary particles. The crystalline phase contained in the silicon primary particles is not limited in particularly.

The silicon primary particles may be porous silicon primary particles. That is to say, the silicon primary particles may have a plurality of pores. This enables mitigation of the effects of expansion and contraction of silicon not only by the voids in the electrode active material composite particles described below, but also by the pores in the silicon primary particles. The pore count, pore volume, pore diameter, and so forth of the porous silicon primary particles are not limited in particular, and can be set as appropriate, taking into consideration the magnitude of expansion and contraction of silicon, and so forth. The pore diameter may be, for example, in the order of nanometers.

The d50 particle size of the silicon primary particles is not limited in particular, and can be set as appropriate, taking into consideration the d50 particle size of the desired electrode active material composite particles, and so forth.

The d50 particle size of the silicon primary particles can be controlled by, for example, classification processing or the like. When the silicon primary particles are porous silicon primary particles, the d50 particle size of the porous silicon primary particles can also be controlled, for example, by adjusting production conditions of the porous silicon particles.

The d50 particle size of the silicon primary particles can be measured by a laser diffraction/scattering particle size distribution analyzer. For a dispersion medium, pure water can be used. The refractive index at the time of measurement may be, for example, 3.5.

For the laser diffraction/scattering particle size distribution analyzer, Partica LA-960V2 manufactured by HORIBA, for example, can be used.

The content of the silicon primary particles in the electrode active material composite particles is not limited in particular, and can be set as appropriate, taking into consideration the desired battery capacity and the like.

The number of silicon primary particles in the electrode active material composite particles is not limited in particular.

### Binder

The electrode active material composite particles according to the present disclosure may further contain a binder. The binder can bind the silicon primary particles to each other.

The binder is not limited in particular, and may be, for example, a butadiene rubber (BR)-based binder, a butylene rubber (IIR)-based binder, an acrylate butadiene rubber (ABR)-based binder, a styrene butadiene rubber (SBR)-based binder, a polyvinylidene fluoride (PVdF)-based binder, a polytetrafluoroethylene (PTFE)-based binder, a polyimide (PI)-based binder, a carboxymethyl cellulose (CMC)-based binder, a polyacrylate-based binder, a polyacrylic acid ester-based binder, and so forth, or a combination thereof.

The content of the binder in the electrode active material composite particles is not limited in particular, and can be set as appropriate, taking into consideration desired binding properties and the like.

### Voids

The electrode active material composite particles according to the present disclosure have a plurality of the voids. These voids can also serve to mitigate the effects of expansion and contraction of silicon that occurs during charging and discharging of the battery.

The number of voids, porosity, void size, and so forth in the electrode active material composite particles are not limited in particular, and can be set as appropriate, taking into consideration, for example, the magnitude of expansion and contraction of silicon, and so forth.

### Fracture Strength / (Standard Deviation of Particle Size / d50 Particle Size)

In the electrode active material composite particles according to the present disclosure, the value of the following Expression (1) is 5.0 MPa to 22.0 MPa:$Fracture strength / \left(Standard deviation of particle size / d50 particle size\right)$

This can improve the ionic conductivity of the electrode active material layer. Also, the effects of expansion and contraction of silicon caused by charging and discharging the battery can be mitigated.

In the electrode active material composite particles according to the present disclosure, the value of the above Expression (1) may be 7.0 MPa to 20.0 MPa, or 9.0 MPa to 15.0 MPa. This value may be 5.0 MPa or more, 6.0 MPa or more, 7.0 MPa or more, 7.5 MPa or more, 8.0 MPa or more, 8.5 MPa or more, 9.0 MPa or more, 9.5 MPa or more, 10.0 MPa or more, 10.5 MPa or more, 11.0 MPa or more, 11.5 MPa or more, 12.0 MPa or more, 12.5 MPa or more, 13.0 MPa or more, or 13.5 MPa or more, and may also be 22.0 MPa or less, 21.0 MPa or less, 19.0 MPa or less, 18.0 MPa or less, 17.0 MPa or less, 16.0 MPa or less, 15.0 MPa or less, 14.5 MPa or less, 14.0 MPa or less, 13.5 MPa or less, 13.0 MPa or less, 12.5 MPa or less, 12.0 MPa or less, 11.5 MPa or less, 11.0 MPa or less, 10.5 MPa or less, or 10.0 MPa or less. This can effectively improve the ionic conductivity of the electrode active material layer. Also, the effects of expansion and contraction of silicon caused by charging and discharging the battery can be effectively mitigated.

### Fracture Strength

In the present disclosure, fracture strength is a measurement of the strength of a composite particle with respect to compressive stress. The electrode active material composite particles according to the present disclosure may have a fracture strength of 2.0 MPa to 11.0 MPa, or 4.0 MPa to 5.5 MPa. The fracture strength may be 2.0 MPa or more, 2.5 MPa or more, 3.0 MPa or more, 3.5 MPa or more, 4.0 MPa or more, 4.5 MPa or more, or 5.0 MPa or more, and may also be 11.0 MPa or less, 10.0 MPa or less, 9.0 MPa or less, 8.0 MPa or less, 7.0 MPa or less, 6.0 MPa or less, 5.5 MPa or less, 5.0 MPa or less, 4.5 MPa or less, or 4.0 MPa or less. This can effectively improve the ionic conductivity of the electrode active material layer. Also, the effects of expansion and contraction of silicon caused by charging and discharging the battery can be effectively mitigated.

The fracture strength can be measured by scattering a very small amount of the composite particles on a sample stage of a measuring device, and thereafter measuring the diameters thereof in the X direction and the Y direction, taking the average particle size as d, and applying a load to each particle, one at a time. The number of samples is preferably large, and may be, for example, 1 or more, 3 or more, 5 or more, 10 or more, 50 or more, or 100 or more. When a spherical particle is compressed, apparent fracture strength is such that compressive stress is distributed near a loading point, but tensile stress is distributed over almost the entire surface in other locations. Accordingly, at the point in time when displacement in a load-displacement diagram increases suddenly, determination can be made that the particle has undergone large-scale fracture, and the apparent fracture strength of the particle can be calculated using the following Expression. ${S}_{t} = \frac{2.8 P}{{πd}^{2}}$
Sₜ: Apparent fracture strength
P: Fracture load
d: Average particle size of measured particles

The fracture strength can be measured using a Shimadzu MCT-210 microcompression tester. The measurement conditions may be as follows, for example.
Indenter used: Flat indenter (50 µm diameter)
Load speed: 0.15 mN/sec
Measurement environment: Room temperature, ambient atmosphere

### Standard deviation of particle size / d50 particle size

The value of the standard deviation of particle size / d50 particle size may be 0.30 µm to 1.2 µm, or 0.35 µm to 0.45 µm. This value may be 0.10 µm or more, 0.20 µm or more, 0.30 µm or more, or 0.35 µm or more, and may also be 1.5 µm or less, 1.2 µm or less, 1.0 µm or less, 0.80 µm or less, 0.60 µm or less, 0.50 µm or less, or 0.45 µm or less.

In the present disclosure, the "standard deviation of particle size / value of d50 particle size" is an index for relative evaluation of variance in particle size, and has the same meaning as a coefficient of variation (standard deviation of particle size / value of average particle size).

### d50 Particle Size

The d50 particle size may be 7.0 µm to 15 µm, or 8.5 µm to 12 µm. The d50 particle size may be 5.0 µm or more, 6.0 µm or more, 7.0 µm or more, 8.0 µm or more, 8.5 µm or more, 9.0 µm or more, 9.5 µm or more, 10 µm or more, or 11 µm or more, and may also be 15 µm or less, 14 µm or less, 12 µm or less, 11 µm or less, 10 µm or less, 9.0 µm or less, or 8.5 µm or less.

For the measurement of the d50 particle size of the electrode active material composite particles, reference can be made to the above description of the measurement of the d50 particle size of the silicon primary particles.

The d50 of the composite particles may be measured from an electrode laminate obtained by disassembling a battery, through the following procedures. That is to say, at least a part of an anode active material layer is taken out as a sample from the electrode laminate that is obtained, and is washed with an organic solvent capable of dissolving the solid electrolyte. Thereafter, the d50 of the composite particles can be measured using the aforementioned laser diffraction/scattering particle size distribution analyzer.

### Standard Deviation of Particle Size

Standard deviation σ of the particle size may be 3.0 µm to 16 µm, or 3.0 µm to 4.5 µm. The standard deviation σ of the particle size may be 3.0 µm or more, 3.5 µm or more, or 4.0 µm or more, and may also be 20 µm or less, 16 µm or less, 13 µm or less, 10 µm or less, 8.0 µm or less, 6.0 µm or less, 5.5 µm or less, 5.0 µm or less, 4.5 µm or less, 4.0 µm or less, or 3.5 µm or less.

### Production Method of Electrode Active Material Composite Particles

The electrode active material composite particles according to the present disclosure can be produced by a method including the following processes of providing a slurry containing silicon primary particles and a dispersion medium, and drying and removing the dispersion medium by spray drying.

For the silicon primary particles, the above description can be referred to.

The dispersion medium is not limited in particular as long as it can disperse silicon primary particles.

The slurry may further include a binder. The above description can be referenced regarding the binder.

When the slurry contains a binder, the dispersion medium is not limited in particular, as long as it can disperse the silicon primary particles and also dissolve or disperse the binder.

The d50 particle size and fracture strength of the electrode active material composite particles can be controlled by adjusting the solid content concentration of the slurry, the spray pressure and the amount of liquid pumped during spray drying, and so forth.

The drying temperature in the spray drying is not limited in particular, and can be set as appropriate, taking into consideration the solid content concentration of the slurry, and so forth.

### Electrode Active Material Layer

The electrode active material layer according to the present disclosure contains the electrode active material composite particles according to the present disclosure. The electrode active material layer may optionally contain a solid electrolyte, a conductive aid, a binder, and the like.

In the present disclosure, "electrode active material layer" may be either "cathode active material layer" or "anode active material layer", and may particularly be "anode active material layer".

Hereinafter, each element making up the electrode active material layer according to the present disclosure will be described.

### Electrode Active Material Composite Particle

The above description can be referenced regarding the electrode active material composite particles.

The content of the electrode active material composite particles in the electrode active material layer is not limited in particular, and can be set as appropriate, taking into consideration the desired battery capacity and so forth.

### Solid Electrolyte

Examples of the solid electrolyte include inorganic solid electrolytes such as a sulfide solid electrolyte, an oxide solid electrolyte, a nitride solid electrolyte, a halide solid electrolyte, or the like, and organic polymer electrolytes such as a polymer electrolyte or the like. The solid electrolyte may in particular be a sulfide solid electrolyte.

When the battery is a lithium-ion secondary battery, for example, the solid electrolyte may have lithium ion conductivity.

Examples of sulfide solid electrolytes having lithium ion conductivity include solid electrolytes containing an Li element, an X element (X is at least one type of P, As, Sb, Si, Ge, Sn, B, Al, Ga, and In), and an S element. Also, the sulfide solid electrolyte may further contain at least one of an O element and a halogen element. Examples of halogen elements include an F element, a Cl element, a Br element, and an I element.

Examples of the sulfide solid electrolyte having lithium-ion conductivity include Li₂S-P₂S₅, Li₂S-P₂S₅-LiI, Li₂S-P₂S₅-GeS₂, Li₂S-P₂S₅-Li₂O, Li₂S-P₂S₅-Li₂O-LiI, Li₂S-P₂S₅-LiI-LiBr, Li₂S-SiS₂, Li₂S-SiS₂-LiI, Li₂S-SiS₂-LiBr, Li₂S-SiS₂-LiCl, Li₂S-SiS₂-B₂S₃-LiI, Li₂S-SiS₂-P₂S₅-LiI, Li₂S-B₂S₃, Li₂S-P₂S₅-ZmSn (where m and n are positive numerals, and Z is any of Ge, Zn, and Ga), Li₂S-GeS₂, Li₂S-SiS₂-Li₃PO₄, Li₂S-SiS₂-LiₓMO_{y} (where x and y are positive numerals, and M is any one of P, Si, Ge, B, Al, Ga, and In).

Examples of oxide solid electrolytes having lithium ion conductivity include solid electrolytes containing an Li element, a Y element (Y is at least one of Nb, B, Al, Si, P, Ti, Zr, Mo, W, and S), and an O element. Specific examples include garnet solid electrolytes such as Li₇La₃Zr₂O₁₂, Li₇₋ₓLa₃(Zr₂₋ₓNbₓ)O₁₂ (0 ≤ x ≤ 2), Li₅La₃Nb₂O₁₂, and so forth; perovskite solid electrolytes such as (Li, La)TiO₃, (Li, La)NbO₃, (Li, Sr)(Ta, Zr)O₃, and so forth; NASICON solid electrolytes of Li(Al, Ti)(PO₄)₃ and Li(Al, Ga)(PO₄)₃; Li-P-O-based solid electrolytes such as Li₃PO₄, LIPON (compound in which part of O of Li₃PO₄ is substituted with N), and so forth; and Li-B-O-based solid electrolytes such as Li₃BO₃, a compound in which part of O of Li₃BO₃ is substituted with C, and so forth.

The content of the solid electrolyte in the electrode active material layer is not limited in particular, and can be set as appropriate, taking into consideration the desired ion conductivity and so forth.

### Conductive Aid

The conductive aid may be, for example, a carbon material, metal particles, or a combination thereof. The carbon material may be, for example, a non-fibrous carbon material such as acetylene black (AB), Ketjen black (KB), or the like; a fibrous carbon material such as vapor grown carbon fiber (VGCF), carbon nanotubes (CNT), carbon nanofibers (CNF), and so forth; or a combination thereof. The metal particles may be, for example, nickel, copper, iron, stainless steel, or a combination thereof.

The content of the conductive aid in the electrode active material layer is not limited in particular, and can be set as appropriate, taking into consideration the desired conductivity and the like.

### Binder

The binder may be, for example, a rubber-based binder such as butadiene rubber, hydrogenated butadiene rubber, styrene butadiene rubber (SBR), hydrogenated styrene butadiene rubber, nitrile butadiene rubber, hydrogenated nitrile butadiene rubber, acrylate butadiene rubber (ABR), ethylene propylene rubber, or the like; a fluoride-based binder such as polyvinylidene difluoride (PVdF), polyvinylidene difluoride-polyhexafluoropropylene copolymer (PVdF-HFP), polytetrafluoroethylene, fluororubber, or the like; a polyolefin-based thermoplastic resin such as polyethylene, polypropylene, polystyrene, or the like; an imide-based resin such as polyimide, polyamideimide, or the like; an amide-based resin such as polyamide or the like; an acrylic-based resin such as polymethyl acrylate, polyethyl acrylate, or the like; a methacrylic-based resin such as polymethyl methacrylate, polyethyl methacrylate, or the like; or a combination thereof.

The content of the binder in the electrode active material layer is not limited in particular, and can be set as appropriate taking into consideration desired binding properties, and the like.

### Other Components

The electrode active material layer may or may not further contain components other than those described above.

### Manufacturing Method of Electrode Active Material Layer

The electrode active material layer according to the present disclosure can be produced by a method including the following processes:
providing an electrode composite material slurry containing the electrode active material composite particles according to the present disclosure, and a dispersion medium; and
drying and removing the dispersion medium by spray drying.

In the present disclosure, the term "electrode composite material" refers to a composition by which an electrode active material layer can be made, either by itself or by further containing other components. Also, with respect to the present disclosure, the term "electrode composite material slurry" refers to a slurry that contains a dispersion medium in addition to the "electrode composite material" and thus can be applied and dried to form an electrode active material layer.

The above description can be referenced regarding the electrode active material composite particle according to the present disclosure.

The dispersion medium is not limited in particular as long as it can disperse the electrode active material composite particles.

The dispersion medium may further include a binder. In this case, the dispersion medium is not limited in particular as long as it can disperse the electrode active material composite particles and also disperse or dissolve the binder.

For the binder, reference can be made to the above description regarding the electrode active material layer according to the present disclosure.

The solid content concentration of the electrode composite material slurry, the drying conditions by spray drying, and so forth, are not limited in particular.

### Battery

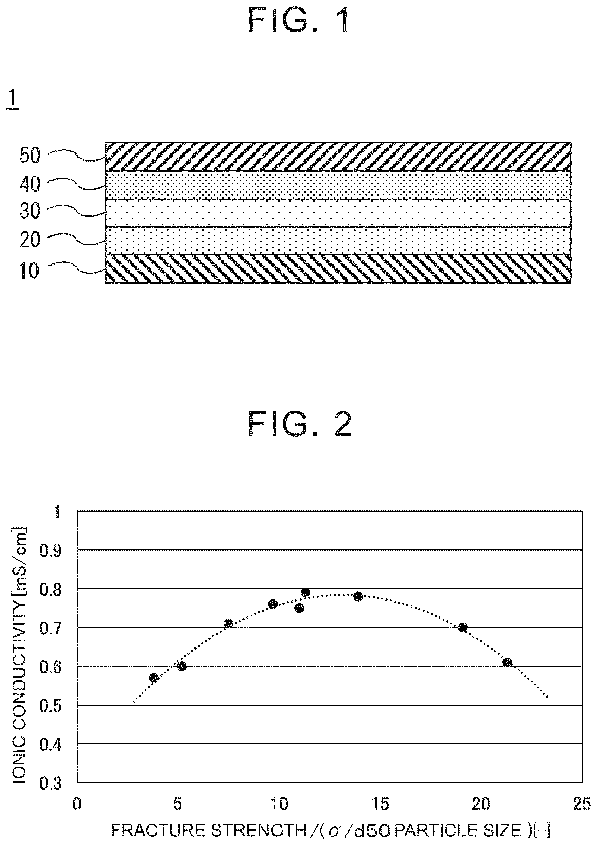

The battery according to the present disclosure has the electrode active material layer according to the present disclosure. As illustrated in FIG. 1 , a battery 1 according to the present disclosure may have an anode current collector layer 10, an anode active material layer 20, an electrolyte layer 30, a cathode active material layer 40, and a cathode current collector layer 50, in this order. In the battery according to the present disclosure, the anode active material layer 20 in particular may be the electrode active material layer according to the present disclosure.

The battery according to the present disclosure may be a liquid battery or a solid-state battery, and in particular may be a solid-state battery. The solid-state battery may include a combination of a solid electrolyte and a liquid electrolyte, as the electrolyte. Also, a solid-state battery may also be an all-solid-state battery, i.e., a battery containing only a solid electrolyte as the electrolyte.

The battery according to the present disclosure may be a primary battery or a secondary battery, and in particular may be a lithium-ion secondary battery.

The battery according to the present disclosure may be restrained by restraining members such as end plates or the like, from both sides in a laminating direction of the above-described layers. An example of a restraining method is a method that utilizes restraining torque of bolts or the like, but is not limited thereto.

Each of the elements making up the battery according to the present disclosure will be described below. The following exemplarily describes below a case in which the battery according to the present disclosure is an all-solid-state battery and also the electrode active material layer containing the electrode composite material according to the present disclosure is an anode active material layer.

### Anode Current Collector Layer

The anode current collector layer may be in the form of a foil, plate, mesh, punched metal, foam, and so forth. The anode current collector layer may be a metal foil or a metal mesh, or may be a carbon sheet, and may particularly be a metal foil. The anode current collector layer may be made of a plurality of sheets of foil, sheets, or the like.

Metal making up the anode current collector layer is not limited in particular, and may be, for example, copper, nickel, chromium, gold, platinum, silver, aluminum, iron, titanium, zinc, cobalt, stainless steel, or the like. In particular, the anode current collector layer may contain at least one type of metal selected from among copper, nickel, and stainless steel.

For the purpose of adjusting resistance or the like, some sort of coating layer may be formed on the surface of the anode current collector layer. Also, the anode current collector layer may be formed by plating or vapor deposition of any of the above metals onto a metal foil or a substrate. Also, when made of multiple sheets of metal foil, the anode current collector layer may further include some sort of layer interposed between the multiple sheets of metal foil.

The thickness of the anode current collector layer is not limited in particular, and may be, for example, 0.1 µm or more, or 1 µm or more, and also may be 1 mm or less, or 100 µm or less.

### Anode Active Material Layer

The anode active material layer contains the electrode composite material according to the present disclosure. The above description can be referenced regarding the electrode composite material according to the present disclosure. The anode active material layer may be formed by forming the electrode composite material according to the present disclosure, itself, into a layer.

The thickness of the anode active material layer is not limited in particular, and may be, for example, 0.1 µm or more and 1000 µm or less.

### Solid Electrolyte Layer

The solid electrolyte layer contains at least solid electrolyte particles, and may optionally further contain a binder and so forth.

The above description can be referenced regarding the solid electrolyte particles and the binder.

The thickness of the solid electrolyte layer is not limited in particular, and may be, for example, 0.1 µm or more and 1000 µm or less.

### Cathode Active Material Layer

The cathode active material layer contains at least a cathode active material, and may optionally further contain a solid electrolyte, a conductive aid, a binder, and so forth.

The cathode active material is not limited in particular, and may be, for example, an oxide active material. The oxide active material used in a lithium-ion battery may be, for example, LiCoO₂, LiMnO₂, Li₂NiMn₃O₈, LiVO₂, LiCrO₂, LiFePO₄, LiCoPO₄, LiNiO₂, LiNi_{1/3}Co_{1/3}Mn_{1/3}O₂, or the like. Also, a coating layer containing a Li-ion conductive oxide, such as for example, LiNbO₃ or the like, may be formed on the surface of these active materials.

The content of the cathode active material in the cathode active material layer is not limited in particular.

The above description can be referenced regarding the solid electrolyte, the conductive aid, and the binder.

The thickness of the cathode active material layer is not limited in particular, and may be, for example, 0.1 µm or more and 1000 µm or less.

### Cathode Current Collector Layer

The cathode current collector layer may be in the form of a foil, plate, mesh, punched metal, foam, and so forth. The cathode current collector layer may be a metal foil or a metal mesh, and in particular may be a metal foil. The cathode current collector layer may be made of multiple sheets of foil.

The metal making up the cathode current collector layer may be copper, nickel, chromium, gold, platinum, silver, aluminum, iron, titanium, zinc, cobalt, stainless steel, or the like, and the cathode current collector layer may, in particular, contain aluminum.

For the purpose of adjusting the resistance or the like, some sort of coating layer may be formed on the surface of the cathode current collector layer. Also, the cathode current collector layer may also be formed by plating or vapor deposition of any of the above metals onto a metal foil or a substrate. Also, when made of multiple sheets of metal foil, the cathode current collector layer may include some sort of layer interposed between the multiple sheets of metal foil.

The thickness of the cathode current collector layer is not limited in particular, and may be, for example, 0.1 µm or more, or 1 µm or more, and may be 1 mm or less, or 100 µm or less.

### Other Configurations

The battery may be a battery in which the above configurations are accommodated inside an outer encasement. Any known outer encasement for a battery can be employed as the outer encasement. Also, a plurality of batteries may be electrically connected in any manner and also stacked in any manner to form a battery pack. In this case, this battery pack may be accommodated inside a known battery case. The battery may also include other obvious components, such as necessary terminals and so forth. The shape of the battery may be, for example, a coin shape, a laminate (pouch) shape, a cylindrical shape, a rectangular shape, or the like.

The method for manufacturing the battery according to the present disclosure is not limited in particular, and includes, for example, forming an anode active material layer containing the electrode composite material according to the present disclosure.

An example of the method for forming the anode active material layer containing the electrode composite material is a method in which constituent materials such as silicon primary particles or the like are mixed to obtain an electrode composite material, and the electrode composite material that is obtained is then molded by dry molding or wet molding.

The method for manufacturing the battery according to the present disclosure may further include laminating an anode current collector layer, an anode active material layer, a solid electrolyte layer, a cathode active material layer, and a cathode current collector layer, in this order, to form an electrode laminate.

Other members, such as terminals or the like, are attached to the electrode laminate as necessary. The electrode laminate is accommodated in a battery case and sealed, thereby obtaining a battery.

### Example 1

### Preparation of Electrode Active Material Composite Particles

A binder was dissolved or dispersed in an organic solvent serving as a dispersion medium, and porous silicon (Si) primary particles, prepared by a conventional method, were added to the solution to obtain a slurry. The organic solvent in the slurry was dried and removed by spray drying to prepare the electrode active material composite particles of Example 1.

The d50 particle size of the electrode active material composite particles was measured using the laser diffraction/scattering particle size distribution analyzer (Partica LA-960V2, manufactured by HORIBA). The dispersion medium used was pure water, and the refractive index was set to 3.5.

Measurement of the fracture strength was carried out by scattering a very small amount of composite particles on a sample stage of a measuring device, and thereafter measuring the diameters in the X direction and the Y direction, taking the average particle size as d, and applying a load to each particle, one at a time. At the point in time when the displacement in the load-displacement diagram suddenly increased, determination was made that the particle had undergone large-scale fracture, and the apparent fracture strength of the particle was calculated using the following Expression. ${S}_{t} = \frac{2.8 P}{{πd}^{2}}$
St: Apparent fracture strength
P: Fracture load
d: Average particle size of measured particles

The fracture strength was measured using a Shimadzu MCT-210 microcompression tester. The measurement conditions were as follows.
Indenter used: Flat indenter (50 µm diameter)
Load speed: 0.15 mN/sec
Measurement environment: Room temperature, ambient atmosphere

Table 1 shows the d50 particle size, the standard deviation of particle size, the value of the standard deviation of particle size / d50 particle size, the fracture strength, and the value of the fracture strength / (standard deviation of particle size / d50 particle size).

In each of the examples described below, the d50 particle size and the fracture strength were measured in the same way.

### Formation of Anode Active Material Layer

The electrode active material composite particles that were obtained, a binder, a conductive aid, and a solid electrolyte, were added to an organic solvent to prepare a mixed solution. This mixed solution was kneaded using an ultrasonic homogenizer to obtain an anode composite material slurry. The anode composite material slurry that was obtained was applied to a nickel foil serving as an anode current collector layer to form an anode active material layer. As a result, an anode laminate in which the anode current collector layer and the anode active material layer were laminated was obtained, and this was formed into a strip shape.

### Formation of Solid Electrolyte Layer

A binder and a solid electrolyte were added to an organic solvent to prepare a mixed solution. This mixed solution was kneaded using an ultrasonic homogenizer to obtain a solid electrolyte composite material slurry. The solid electrolyte composite material slurry that was obtained was applied to an aluminum (Al) foil as a release sheet to form a solid electrolyte layer. A total of three solid electrolyte layers were formed in the same manner and were formed into strip shapes.

### Formation of Cathode Active Material Layer

A binder, a conductive aid, a solid electrolyte, and LiNi_{0.8}Co_{0.15}Mn_{0.05}O₂ as a cathode active material, were added to an organic solvent, so as to prepare a mixed solution. This mixed solution was kneaded using an ultrasonic homogenizer to obtain a cathode composite material slurry. The cathode composite material slurry that was obtained was applied to an Al foil as a cathode current collector layer to form a cathode active material layer. Thus, a cathode laminate in which the cathode current collector layer and the cathode active material layer were laminated was obtained, and this was formed into a strip shape.

### Fabrication of Battery

The anode laminate and the second solid electrolyte layer were laminated together with the anode active material layer and the solid electrolyte layer facing each other, and then roll pressed at 25 °C and a pressure of 50 kN/cm. Al foil serving as a release sheet was peeled off from the solid electrolyte layer, thereby transferring the solid electrolyte layer onto the anode active material layer.

The cathode laminate and the first solid electrolyte layer were laminated together with the cathode active material layer and the solid electrolyte layer facing each other, and then roll pressed at 165 °C and a pressure of 50 kN/cm. Al foil serving as a release sheet was peeled off from the solid electrolyte layer, thereby transferring the solid electrolyte layer onto the cathode active material layer.

The anode laminate to which the solid electrolyte layer was transferred and the cathode laminate to which the solid electrolyte layer was transferred were punched out using punching machines with a diameter of 13.00 mm and a diameter of 11.28 mm, respectively.

A third solid electrolyte layer was punched out to a predetermined size using a uniaxial press and further transferred onto the second solid electrolyte layer laminated on the anode active material layer. The anode laminate and the cathode laminate were laminated such that the solid electrolyte layer on the anode active material layer and the solid electrolyte layer on the cathode active material layer faced each other.

Current extraction tabs were attached to the cathode active material layer and the anode active material layer, and the layers were sealed in an Al laminate using a vacuum laminate sealer and restrained at a pressure of 5 MPa to fabricate an all-solid-state battery.

### Examples 2 to 8 and Comparative Example 1

The electrode active material composite particles of Examples 2 to 8 and Comparative Example 1 were obtained in the same manner as in Example 1, except that the d50 particle size and the fracture strength of the electrode active material composite particles were changed by adjusting the solid content concentration of the slurry during preparation of the electrode active material composite particles, and the spray pressure and the amount of liquid pumped during spray drying.

### Evaluation

### Ionic conductivity

Next, 5 mg of the anode composite material powder obtained from the anode active material layer peeled off from the anode laminate was placed in a Macor cylinder and pressed at a pressure of 6 T to prepare a pellet. Both ends of the pellet that was obtained were pinned with stainless steel pins, and a restraining pressure was applied to the pellet by tightening with bolts. The ionic conductivity of the obtained sample was calculated by an alternating current impedance method, in a state in which the temperature was kept at 25 °C. For the measurement, a Solartron 1260 was used, the applied voltage was set to 5 mV, and the measurement frequency range was set to 0.01 MHz to 1 MHz.

### Restraining Pressure Increase Amount

The all-solid-state battery that was obtained was charged from an uncharged state to 4.05 V, and the increase in restraining pressure at the time of charging was measured using a load cell. The results are shown in Table 1. Values shown in Table 1 are measured values at the point in time when the Si charge amount was 1000 mAh, normalized by the capacity of the all-solid-state battery. The increase in restraining pressure means the amount of expansion of the electrode active material composite particles.

**Table 1**

| | d50 particle size [µm] | σ [µm] | Coefficient of variation of d50 particle size [-] | Fracture Strength [MPa] | Fracture strength / (Standard deviation of particle size / d50 particle size) [MPa] | Ionic conductivity [mS/cm] | Restraining Pressure Increase Amount [MPa/mAh] |
|---|---|---|---|---|---|---|---|
| Comparative Example 1 | 6.6 | 2.6 | 0.40 | 1.5 | 3.8 | 0.57 | 0.26 |
| Example 1 | 13.8 | 15.4 | 1.12 | 5.8 | 5.2 | 0.60 | 0.21 |
| Example 2 | 9.3 | 3.6 | 0.38 | 2.9 | 7.5 | 0.71 | 0.19 |
| Example 3 | 11.6 | 4.4 | 0.38 | 3.7 | 9.7 | 0.76 | 0.20 |
| Example 4 | 8.6 | 3.3 | 0.39 | 4.3 | 11.0 | 0.75 | 0.15 |
| Example 5 | 9.2 | 3.6 | 0.39 | 4.4 | 11.3 | 0.79 | 0.19 |
| Example 6 | 9.0 | 3.3 | 0.37 | 5.1 | 13.9 | 0.78 | 0.21 |
| Example 7 | 10.1 | 5.2 | 0.51 | 9.8 | 19.1 | 0.70 | 0.22 |
| Example 8 | 9.3 | 4.5 | 0.48 | 10.3 | 21.3 | 0.61 | 0.22 |

As shown in Table 1, the batteries of Examples 1 to 8, in which the value of Expression (1) was within the range of the present disclosure, had high ionic conductivity and also a small increase in restraining pressure. Furthermore, the batteries of Examples 2 to 7, in which the above value was 7.0 MPa to 20.0 MPa, had particularly high ionic conductivity.

## Claims

1. An electrode active material composite particle comprising a plurality of silicon primary particles, wherein a value of the following Expression (1) is 5.0 MPa to 22.0 MPa $Fracture strength / \left(Standard deviation of particle size / d50 particle size\right)$

2. The electrode active material composite particle according to claim 1, wherein the value of the Expression (1) is 7.0 MPa to 20.0 MPa.

3. The electrode active material composite particle according to claim 1 or 2, wherein the fracture strength is 2.0 MPa or higher.

4. An electrode active material layer comprising the electrode active material composite particle according to any one of claims 1 to 3.

5. A battery comprising the electrode active material layer according to claim 4.
